# EUROPÄISCHE PATENTANMELDUNG

(11) **EP 1 911 701 A1**
(43) Veröffentlichungstag der Anmeldung: **16.04.2008**
(21) Anmeldenummer: 07019785.0
(22) Anmeldetag: 10.10.2007
(51) Int. Cl.: B65G 47/91, B66C 1/02

(54) **Sauggreifer zur Handhabung von Werkstücken**

(30) Priorität: 11.10.2006 DE 102006048069
(71) Anmelder: EADS Deutschland GmbH, 85521 Ottobrunn (DE)
(72) Erfinder: Müller-Hummel, Peter, Dr., 89340 Laupheim (DE)

(57) **Zusammenfassung**

Die Erfindung betrifft einen Sauggreifer (10) zur Handhabung von Werkstücken, mit einer werkstückseitigen Ansaugplatte (2), welche eine Mehrzahl von Ansaugöffnungen (10) aufweist, die in Verbindung mit einer oder mehreren Unterdruckquellen stehen, wobei der Sauggreifer (10) mehrere Schablonen (1) umfasst, sowie Mittel (3) zur Positionierung der Schablonen auf der Ansaugplatte (2), um durch Auswahl einer bestimmten Schablone (1) den hinsichtlich der Ansaugung aktiven Bereich der Ansaugplatte (2) einzustellen.

## Beschreibung

Die Erfindung betrifft einen Sauggreifer zur Handhabung von Werkstücken nach dem Oberbegriff des Patentanspruch 1.

Derartige Sauggreifer werden im Flugzeugbau z.B. zur Handhabung von flexiblen CFK-Gelegen (CFK: mit Kohlefasern verstärkter Kunststoff) eingesetzt und sind typischerweise an einem Roboterarm angeordnet, können jedoch aber auch manuell betrieben werden.

Bekannt ist z.B. ein Tuchgreifer der Fa. Brötje Automation GmbH, mit der die aktive Ansaugfläche des Greifers an die Kontur des zu transportierenden Werkstücks angepasst werden kann. Eine Absaugung soll nur an den Ansaugöffnungen erfolgen, die am Werkstück anliegen, um insbesondere zu verhindern, dass weitere Gegenstände (Abfall, Verschnitt) angesaugt wird. Die aktive Ansaugfläche entspricht somit im Wesentlichen der Kontur des Werkstücks selbst. Zu diesem Zweck sind die Ansaugöffnungen an der Ansaugplatte einzeln ansteuerbar, d.h. jede der Ansaugöffnungen (oder alternativ auch einzelne Gruppen von Ansaugöffnungen) ist mit einer Schlauchverbindung zur Unterdruckquelle ausgestattet und kann über Schaltventile einzeln aktiviert oder deaktiviert werden. Aufgrund dieses komplexen Aufbaus handelt es sich um eine sehr schwere und unhandliche Vorrichtung, die insbesondere nicht manuell einsetzbar ist. Die zentrale Unterdruckquelle, z.B. ein Ventilator, ist stationär und separat vom beweglichen Greifer angeordnet. Aufgrund der großen Länge der benötigten Saugleitungen ist die Verlustleistung des Ventilators hoch.

Im Bereich der Handhabung von Leiterplatten sind Sauggreifen bekannt, deren perforierte Absaugplatte wahlweise mit unterschiedlichen Schablonen bedeckt werden kann, um damit saugaktive Bereich der Ansaugplatte festzulegen (EP 0 267 874 A1, DE 196 46 186 A1, DE43 35 735 A1).

In der nicht vorveröffentlichten DE 10 2005 023 487 A1 liegen derartige Schablonen in Rollenform vor und können mittels Rollen an der Ansaugplatte vorbeibewegt werden.

In der DE 100 09 108 A1 ist ein Sauggreifer mit Saugkasten und darauf angeordneter Haube bekannt, innerhalb der mehrere Vakuumgebläse angeordnet sind. Auf der Ansaugplatte ist eine elastische Saugmatte angeordnet, deren Öffnungen mit den Öffnungen der Ansaugplatte korrespondieren.

Aufgabe der Erfindung ist es, einen Sauggreifer mit steuerbarer aktiver Saugfläche zu schaffen, der hinsichtlich des Wechsels einer Schablone sehr flexibel ist und eine gute Eignung für den manuellen Einsatz aufweist.

Diese Aufgabe wird mit dem Sauggreifer nach Patentanspruch 1 gelöst. Vorteilhafte Ausführungen sind Gegenstand von Unteransprüchen.

Gemäß der Erfindung kann der aktive Bereich der Ansaugung an seiner Ansaugplatte dadurch eingestellt werden, dass am Sauggreifer mehrere, auf seiner Ansaugplatte aufbringbare Schablonen vorhanden sind. Eine Schablone umfasst durchlässige und undurchlässige Bereiche, wobei ein durchlässiger Bereich im Wesentlichen der Werkstückkontur entspricht. Durch Wahl einer dieser Schablonen können gezielt einzelne Ansaugöffnungen ausgeblendet werden, während die übrigen, aktiven Ansaugöffnungen, sämtlich innerhalb der Werkstückkontur liegen.

Mit der Erfindung wird ein leichter, handlicher Sauggreifer mit steuerbarer Ansaugfläche geschaffen, der insbesondere auch manuell einsetzbar ist. Aufwendige Rohrverbindungen und Schaltventile sowie komplexe elektronische Steuerungen werden nicht benötigt. Werkstücke lassen sich damit sehr präzise erfassen und transportieren, was insbesondere bei CFK-Gelegen mit sehr hoher Verzugsempfindlichkeit von großer Bedeutung ist.

Erfindungsgemäß sind die Schablonen aus einem flexiblen, aufrollbaren Folienmaterial, z.B. aus einer Kunststofffolie oder einem Tuch. Die einzelnen Schablonen werden zu einem Band aneinandergereiht, das auf mindestens zwei separat angetriebenen Rollen aufgerollt ist. Mittels Rollenantrieb (z.B. manuell mittels Kurbel oder elektrisch) können die Schablonen sequentiell entlang der Ansaugplatte geführt werden, um die gewünschte Schablone an die Ansaugplatte zu transportieren.

In einer vorteilhaften Ausführung der Erfindung befinden sich die Unterdruckquellen, z.B. Ventilatoren, in einem Gehäuse, dessen eine Begrenzungsfläche von der Ansaugplatte gebildet wird. Es entsteht somit eine baulich sehr kompakte Vorrichtung. Die Ventilatoren befinden sich unmittelbar hinter der Ansaugplatte, also in nächster Nahe zu den Ansaugöffnungen, so dass keine Schlauch oder Rohrverbindung zwischen Absaugplatte und Ventilator benötigt wird. Aufgrund dieses kurzen Abstands zwischen Ventilator und Wirkbereich der Absaugung entstehen kaum Druckverluste, wie sie bei längeren Leitungen unausweichlich sind. Die Verlustleistung ist somit sehr niedrig. Aufgrund der Anordnung des Ventilators unmittelbar am Greiferkopf kann der Bediener die Funktion des Greifers sehr effektiv und mit wenig technischem Aufwand steuern. Insbesondere kann er die Leistung direkt am Greifer, z.B. mittels eines Drehgriffs, einstellen, sowie den Greifer je nach aktuellem Bedarf an- und ausschalten. Ein Dauerbetrieb des Ventilators und die damit verbundene Nachteilen wie Lärmbelastung, uneffizienter Energieeinsatz, kann durch die Steuereingriffe des Bedieners vermieden werden.

Die Anzahl der Ventilatoren hängt von der benötigten Ansaugleistung ab. Erfindungsgemäß werden genau zwei gegenläufige Ventilatoren eingesetzt, wobei die Antriebsachsen parallel zueinander gewählt werden. Durch eine solche Anordnung wird ein Drehmomentausgleich erzielt, so dass im Ergebnis kein resultierendes Drehmoment am Sauggreifer angreift. Für den Bediener wird die Handhabbarkeit des Sauggreifers wesentlich verbessert. Den gleichen Effekt erzielt man beim Einsatz einer geradzahligen Anzahl von Ventilatoren, wenn jeweils zwei Ventilatoren gegenläufig sind und parallele Antriebsachsen aufweisen.

Bei den zu verwendenden Ventilatoren kann es dabei sich sowohl um Axialventilatoren als auch um Radialventilatoren (Walzenlüfter) handeln.

Der erfindungsgemäße Sauggreifer eignet sich besonders für die Handhabung von trockenen, flexiblen Fasergelegen bei der Herstellung von Bauteilen aus faserverstärktem Kunststoff. Im Flugzeugbau handelt es sich dabei oft um großformatige Bauteile mit Abmessungen im Bereich mehrerer Meter.

Die Erfindung wird im Folgenden anhand konkreter Ausführungsbeispiele unter Bezugnahme auf Fig. näher erläutert. Es zeigen:
Fig. 1 einen erfindungsgemäßen Sauggreifer in mehreren Ansichten:
   a) isometrische Ansicht
   b) Seitenansicht;
Fig. 2 eine weitere Ausführung des erfindungsgemäßen Sauggreifers;
Fig. 3 die Ansaugplatte eines erfindungsgemäßen Sauggreifers
   a) ohne Schablone
   b) und c) mit jeweils einer aufgebrachten Schablone.

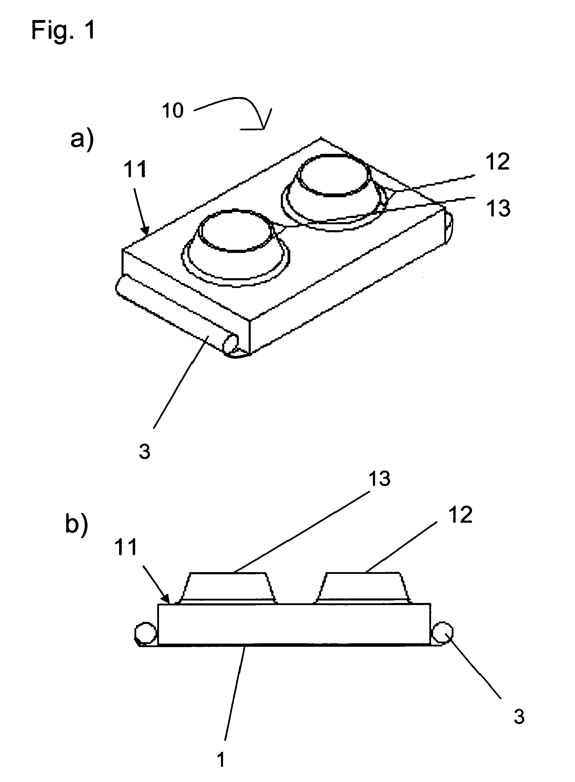

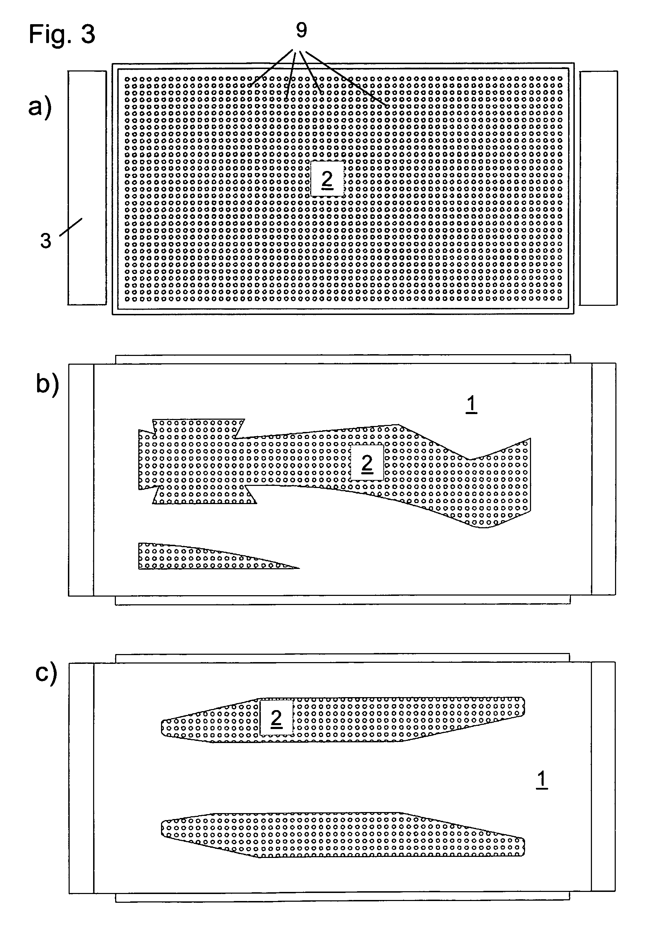

Fig. 1 zeigt eine erste Ausführung des erfindungsgemäßen Sauggreifers 10 in zwei Ansichten (Abb. a): dreidimensionale Ansicht; Abb. b): Seitenansicht). Ein solcher Sauggreifer kann z.B. am Arm eines Roboters (nicht eingezeichnet) angeordnet sein. Der Sauggreifer 10 weist ein Gehäuse 11 auf, dessen Unterseite von einer Ansaugplatte 2 (siehe Fig. 3a) gebildet, in denen sich, z.B. in regelmäßiger Anordnung, die Ansaugöffnungen zum Greifen des zu transportierenden Werkstücks befinden.

An seiner Oberseite weist das Gehäuse 11 zwei Ausbuchtungen 12, 13 auf, innerhalb derer jeweils ein Ventilator zur Unterdruckerzeugung angeordnet ist. Die Ventilatoren sitzen somit unmittelbar hinter der Ansaugplatte, so dass Druckverluste vermieden werden. Das Gehäuse 11 kann an seinen Ausbuchtungen 12,13 mit einem Schlauch zur Abfuhr der Abluft verbunden werden. Es ist jedoch auch möglich, die Abluft direkt in die Atmosphäre abzugeben.

Seitlich am Gehäuse 11 des Sauggreifers sind zwei Auf- bzw. Abwickeleinrichtungen, die hier als Rollen 3 ausgebildet sind, angeordnet. Darauf sind die zu einem Band integrierten Schablonen 1 aufgewickelt, die aus einem flexiblen, aufrollbaren Material bestehen. Durch Drehen der Rollen 3 können die einzelnen Schablonen 1, sequentiell vor die Ansaugplatte des Sauggreifers 10 transportiert werden, um ein gewünschtes Unterdruckprofil an der Ansaugplatte 2 einzustellen. Die Rollen 3 können z.B. manuell oder elektrisch angetrieben werden.

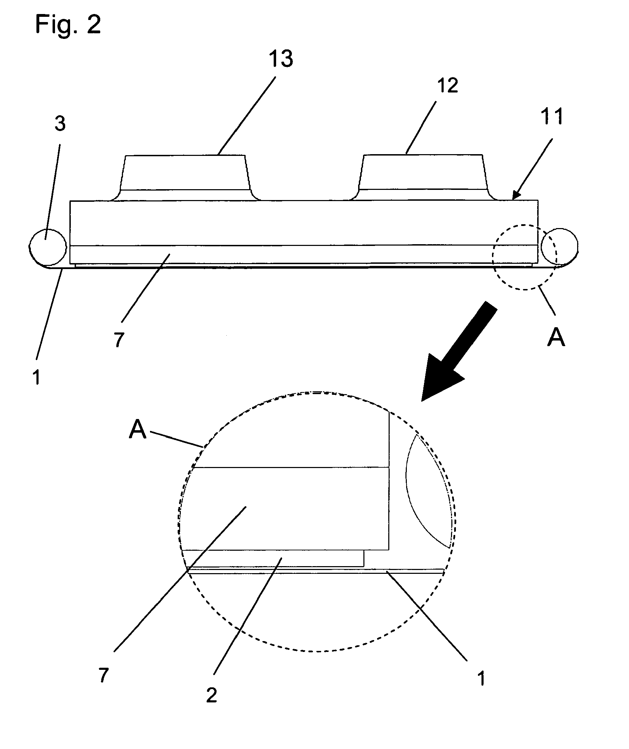

Fig. 2 zeigt eine Variante des in Fig. 1 dargestellten Sauggreifers. Der Ausschnitt A ist in der unteren Abb. nochmals in größerem Maßstab dargestellt. Bei dieser Ausführung ist - in Strömungsrichtung gesehen - hinter der Ansaugplatte 2 eine strömungsdurchlässige Luftverteilerschicht 7 nach Art eines Diffusors zur Homogenisierung der Strömung über den gesamten aktiven Bereich der Ansaugplatte 2 vorhanden. Hier kann z.B. ein offenporiger Schaumstoff verwendet werden. Ebenfalls möglich sind dreidimensionale Waben- oder Gitterstrukturen z.B. aus Metall. Durch die Luftverteilerschicht wird eine sicheres, präzises Greifen des Werkstücks ohne Verzug gefördert.

Fig. 3 zeigt in den Abb. a) bis c) jeweils Untersichten auf eine Ausführung gemäß den Fig. 1 oder 2, jedoch in Abb. a) ohne Schablone 1. Man erkennt in Abb. a) die Ansaugplatte 2, hier ausgebildet als Lochblech mit einer Vielzahl von regelmäßig angeordneten Ansaugöffnungen 9. Alternativ kann auch eine Gitter- oder wabenförmige Struktur aus Metall oder Kunststoff als Ansaugplatte gewählt werden. Die Länge einer solchen Ansaugplatte 2 kann für die Anwendung im Flugzeugbau typischerweise mehr als 2 m betragen.

In den Abb. b) und c) der Fig. 3 sind beispielhaft zwei verschiedene Schablonen 1 auf der Ansaugplatte 2 angeordnet, um eine konturgenaue Ansaugung zu ermöglichen. Die Schablonen weisen durchbrochene Bereiche auf (hier jeweils zwei pro Schablone), die jeweils der Kontur eines aufzunehmenden Werkstücks entsprechen. Die Ansaugung erfolgt somit nur im Bereich der Werkstücke selbst, während die von der Schablone abgedeckten Ansaugöffnungen inaktiv sind. Somit ist sichergestellt, dass neben den zu transportierenden Werkstücken nicht noch weiteres Material angesaugt wird, das dann zunächst wieder entfernt werden müsste.

Selbstverständlich sind auch Schablonen möglich, die nur eine Durchbrechung aufweisen (zum Transport nur eines Werkstücks) oder mit einer beliebigen Anzahl von Durchbrechungen für den Transport einer entsprechenden Anzahl von Werkstücken.

## Patentansprüche

1. Sauggreifer (10) zur Handhabung von Werkstücken, der an seinem werkstückseitigen Ende eine Ansaufplatte (2) aufweist, welche eine Mehrzahl von Ansaugöffnungen (10) aufweist, die in Verbindung mit mehreren Unterdruckquellen stehen, wobei der Sauggreifen (10) mehrere Schablonen (1) umfasst, sowie Mittel (3) zur Positionierung der Schablonen auf der Ansaugplatte (2), um durch Auswahl einer bestimmten Schablone (1) den hinsichtlich der Ansaugung aktiven Bereich der Ansaugplatte (2) einzustellen, **dadurch gekennzeichnet, dass** die Schablonen (1) zu einem Band integriert sind, bei dem die einzelnen Schablonen (1) sequentiell vorliegen, und das Band auf Rollen (3) aufgerollt ist und mittels Rollenantrieb an der Ansaugplatte (2) vorbeibewegt werden kann und dass die Unterdruckquellen in Form eines oder mehrer Ventilatorpaare vorliegen, wobei die Ventilatoren eines Paares gegenläufig sind und parallele Antriebsachsen aufweisen.

2. Sauggreifer (10) nach Anspruch 1, **dadurch gekennzeichnet, dass** die Unterdruckquellen in einem Gehäuse angeordnet sind, dessen eine Begrenzungsfläche von der Ansaugplatte (2) gebildet wird.

3. Sauggreifer (10) nach einem der vorangehenden Ansprüche, **dadurch gekennzeichnet, dass** - in Strömungsrichtung gesehen - hinter der Ansaugplatte (2) eine strömungsdurchlässige Luftverteilerschicht (7) zur gleichmäßigen Strömungsverteilung vorhanden ist.

## Geänderte Patentansprüche

### Geänderte Patentansprüche gemäss Regel 137(2) EPÜ.

**1.** Sauggreifer (10) zur Handhabung von Werkstücken, der an seinem werkstückseitigen Ende eine Ansaugplatte (2) aufweist, welche eine Mehrzahl von Ansaugöffnungen (10) aufweist, die in Verbindung mit mehreren Unterdruckquellen stehen, wobei der Sauggreifer (10) mehrere Schablonen (1) umfasst, sowie Mittel (3) zur Positionierung der Schablonen auf der Ansaugplatte (2), um durch Auswahl einer bestimmten Schablone (1) den hinsichtlich der Ansaugung aktiven Bereich der Ansaugplatte (2) einzustellen, **dadurch gekennzeichnet, dass** die Schablonen (1) zu einem Band integriert sind, bei dem die einzelnen Schablonen (1) sequentiell vorliegen, und das Band auf Rollen (3) aufgerollt ist und mittels Rollenantrieb an der Ansaugplatte (2) vorbeibewegt werden kann und dass der Sauggreifer die Unterdruckquellen in Form eines oder mehrerer Ventilatorpaare umfasst, wobei die Ventilatoren eines Paares gegenläufig sind und parallele Antriebsachsen aufweisen.

**2.** Sauggreifer (10) nach Anspruch 1, **dadurch gekennzeichnet, dass** die Unterdruckquellen in einem Gehäuse angeordnet sind, dessen eine Begrenzungsfläche von der Ansaugplatte (2) gebildet wird.

**3.** Sauggreifer (10) nach einem der vorangehenden Ansprüche, **dadurch gekennzeichnet, dass** - in Strömungsrichtung gesehen - hinter der Ansaugplatte (2) eine strömungsdurchlässige Luftverteilerschicht (7) zur gleichmäßigen Strömungsverteilung vorhanden ist.
